# EUROPÄISCHE PATENTSCHRIFT

(11) **EP 3 128 520 B1**
(45) Veröffentlichungstag und Bekanntmachung des Hinweises auf die Patenterteilung: **17.10.2018**
(21) Anmeldenummer: 16185963.2
(22) Anmeldetag: 29.07.2010
(51) Int. Cl.: H01F 1/01

(54) **WÄRMETAUSCHERBETTEN AUS THERMOMAGNETISCHEM MATERIALMONOLITHEN**
HEAT EXCHANGER BEDS MADE OF THERMOMAGNETIC MATERIAL MONOLITHE
LITS D'ECHANGEUR DE CHALEUR CONSTITUES DE MATERIAU THERMOMAGNETIQUE MONOLITHIQUE

(30) Priorität: 10.08.2009 EP 09167550
(43) Veröffentlichungstag der Anmeldung: 08.02.2017
(62) Teilanmeldung aus: 10737567.7
(73) Patentinhaber: BASF SE, 67056 Ludwigshafen am Rhein (DE)
(72) Erfinder: Carroll, Colman-Patrick, 67133 Maxdorf (DE); Reesink, Bernard Hendrik, 7107 AD Winterswijk-Kotten (NL); Degen, Georg, 64653 Lorsch (DE)

(56) Entgegenhaltungen:
- WO-A1-2008/099235
- WO-A1-2009/090442
- JP-A- 2007 291 437

## Beschreibung

Die Erfindung betrifft Wärmetauscherbetten aus einem thermomagnetischen Materialmonolithen, Verfahren zu ihrer Herstellung und ihre Verwendung, in Kühlschränken, Klimaanlagen, Wärmepumpen oder in der Stromerzeugung durch direkte Umwandlung von Wärme.
Thermomagnetische Materialien, auch als magnetokalorische Materialien bezeichnet, können zur Kühlung, beispielsweise in Kühlschränken oder Klimaanlagen, in Wärmepumpen oder zur direkten Gewinnung von Strom aus Wärme ohne Zwischenschaltung einer Umwandlung in mechanische Energie eingesetzt werden.
Derartige Materialien sind prinzipiell bekannt und beispielsweise in WO 2004/068512 beschrieben. Die magnetischen Kühlungstechniken basieren auf dem magnetokalorischen Effekt (MCE) und können eine Alternative zu den bekannten Dampf-Kreislauf-Kühlverfahren darstellen. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt wird oder entfernt wird, gehen die magnetischen Momente wieder in eine Zufallsanordnung über, was zu einem Abkühlen des Materials unter Umgebungstemperatur führt. Dieser Effekt kann zu Kühlzwecken ausgenutzt werden, siehe auch Nature, Vol. 415, 10. Januar 2002, Seiten 150 bis 152. Typischerweise wird ein Wärmetransfermedium wie Wasser zur Wärmeabfuhr aus dem magnetokalorischen Material eingesetzt.

JP2007 291437 A offenbart einen extrudierten und formgepressten Pressling aus La(Fe_{0.89}Si_{0.11})₁₃ verwendet in einem magnetischen Kühlungsbett für Kühlschrank oder Klimaanlage. Das Bett hat eine Mikrokanälestruktur.

Die in thermomagnetischen Generatoren eingesetzten Materialien basieren ebenfalls auf dem magnetokalorischen Effekt. In einem Material, das einen magnetokalorischen Effekt zeigt, führt die Ausrichtung von zufällig orientierten magnetischen Momenten durch ein externes Magnetfeld zu einem Erwärmen des Materials. Diese Wärme kann vom MCE-Material in die Umgebungsatmosphäre durch einen Wärmetransfer abgeführt werden. Wenn das Magnetfeld daraufhin abgestellt oder entfernt wird, gehen die magnetischen Momente wieder in eine Zufallsanordnung über, was zu einem Abkühlen des Materials unter Umgebungstemperatur führt. Dieser Effekt kann einerseits zu Kühlzwecken ausgenutzt werden, andererseits, um Wärme in elektrische Energie umzuwandeln.
Die magnetokalorische Erzeugung von elektrischer Energie ist verbunden mit der magnetischen Heizung und Kühlung. In den Zeiten der ersten Konzipierung wurde das Verfahren zur Energieerzeugung als pyromagnetische Energieerzeugung beschrieben. Verglichen mit Vorrichtungen der Peltier- oder Seebeck-Typs können diese magnetokalorischen Vorrichtungen eine wesentlich höhere Energieeffizienz aufweisen.
Die Forschung zu diesem physikalischen Phänomen begann im späten 19. Jahrhundert, als zwei Wissenschaftler, Tesla und Edison, pyromagnetische Generatoren zum Patent anmeldeten.
Für die thermomagnetischen oder magnetokalorischen Anwendungen sollte das Material einen effizienten Wärmeaustausch zulassen, um hohe Wirkungsgrade erreichen zu können. Sowohl bei der Kühlung als auch bei der Stromerzeugung wird das thermomagnetische Material in einem Wärmetauscher eingesetzt.
Aufgabe der vorliegenden Erfindung ist die Bereitstellung von Wärmetauscherbetten aus thermomagnetischen Formkörpern, die zum Einsatz in Wärmetauschern, insbesondere für Kühlzwecke oder zur Stromerzeugung, geeignet sind. Dabei sollen die Formkörper eine hohe Wärmeübertragung erlauben, einen geringen Durchflusswiderstand für Wärmetauschermedien aufweisen und eine hohe magnetokalorische Dichte besitzen.

Die Aufgabe wird zudem gelöst, gemäß Anspruch 1, durch ein Wärmetauscherbett aus einem thermomagnetischen Materialmonolithen, der durchgehende Kanäle mit einer Querschnittsfläche der einzelnen Kanäle im Bereich von 0.01 bis 0.025 mm² und einer Wandstärke von 85 bis 150 µm aufweist, eine Porosität im Bereich von 10 bis 60 % hat und ein Verhältnis von Oberfläche zu Volumen im Bereich von 3000 bis 50000 m²/m³ hat.

Das Wärmetauscherbett wird, gemäß Anspruch 5, hergestellt durch Extrudieren, Spritzgießen oder Formpressen des thermomagnetischen Materials zur Ausbildung des Monolithen.

Die Aufgabe wird zudem gelöst, gemäß Anspruch 6, durch die Verwendung eines Wärmetauscherbetts, wie es vorstehend definiert ist, in Kühlschränken, Klimaanlagen, Wärmepumpen oder in der Stromerzeugung durch direkte Umwandlung von Wärme.

Eine vorteilhafte Ausführungsform des Wärmetauscherbettes ist ein thermomagnetischer Materialmonolith, der durchgehende Kanäle aufweist. Der Monolith kann als Block aus thermomagnetischem Material gedacht werden, wobei zwei aneinander gegenüberliegende Stirnseiten des Blocks Ein- bzw. Austrittsöffnungen für ein Fluid aufweisen, die durch Kanäle verbunden sind, die den gesamten Monolithen durchlaufen. Entsprechende Monolithen können sich beispielsweise von einem Rohrbündel ableiten, bei dem die einzelnen Rohre aus thermomagnetischem Material miteinander verbunden sind. Die Kanäle sind vorzugsweise zueinander parallel und durchlaufen in der Regel den Monolithen geradlinig. Sofern besondere Anwendungsbedingungen gestellt werden, kann auch ein gekrümmter Verlauf der Kanäle vorgesehen werden. Entsprechende Monolithformen sind beispielsweise von Autoabgaskatalysatoren bekannt. Die thermomagnetischen Materialmonolithen können so beispielsweise eine Wabenform aufweisen, wobei die einzelnen Waben eine beliebige Geometrie aufweisen können. Beispielsweise können die Kanäle einen sechseckigen Querschnitt wie bei einer Bienenwabe oder einen viereckigen Querschnitt aufweisen. Auch sternförmige Querschnitte, runde Querschnitte, ovale Querschnitte oder andere Querschnittsformen sind erfindungsgemäß möglich, sofern die nachstehenden Bedingungen eingehalten werden:
- Querschnittsfläche der einzelnen Kanäle im Bereich von 0.01 bis 0.025 mm² besonders bevorzugt 0,015 bis 0,025 mm²
- Wandstärke von 85 bis 150 µm, besonders bevorzugt 85 bis 115 µm
- Porosität im Bereich von 10 bis 60 %, besonders bevorzugt 15 bis 35 %, insbesondere 20 bis 30 %
- Verhältnis von Oberfläche zu Volumen im Bereich von 3000 bis 50000 m²/m³, besonders bevorzugt 5000 bis 15000 m²/m³.
Die einzelnen Kanäle können beispielsweise bei rechteckigem Querschnitt Querschnittsdimensionen von 50 µm x 25 µm bis 600 µm x 300 µm, speziell etwa 200 µm x 100 µm aufweisen. Die Wanddicke kann speziell bevorzugt etwa 100 µm betragen. Die Porosität kann besonders bevorzugt etwa 25 % betragen. Damit ist die Porosität typischerweise signifikant geringer als die Porosität eines gepackten Kugelbettes. Hierdurch kann mehr magnetokalorisches Material in ein gegebenes Volumen des Magnetfelds eingebracht werden. Dies führt zu einem größeren thermischen Effekt bei gleichem Aufwand zur Bereitstellung des Magnetfelds.
Die Formkörper weisen durchgehende Kanäle auf. Dies erlaubt den Durchfluss eines flüssigen Wärmeträgermediums wie Wasser, Wasser/Alkohol-Gemische, Wasser/Salz-Gemische oder Gase wie Luft oder Edelgase. Bevorzugt werden Wasser oder Wasser/Alkohol-Gemische eingesetzt, wobei der Alkohol ein ein- oder mehrwertiger Alkohol sein kann. Beispielsweise kann es sich um Glykole handeln.
Die Monolithe können beispielsweise aus Schichten von magnetokalorischem Material mit dünnen parallelen Kanälen in den Schichten aufgebaut sein.

Das sehr große Verhältnis von Oberfläche zu Volumen erlaubt einen exzellenten Wärmetransfer, gekoppelt mit einem sehr geringen Druckverlust. Der Druckverlust ist etwa eine Größenordnung geringer als bei einem gepackten Bett von Kugeln, das den identischen Wärmetransferkoeffizienten aufweist. Durch die Monolithform kann damit der Leistungskoeffizient (COP) beispielsweise einer magnetokalorischen Kühleinrichtung nochmals erheblich verbessert werden.

Das thermomagnetische Material an sich kann dabei aus beliebigen geeigneten thermomagnetischen Materialien ausgewählt werden. Geeignete Materialien sind in einer Vielzahl von Schriften beschrieben, beispielsweise in WO 2004/068512.

Bevorzugte thermomagnetische Materialien sind ausgewählt aus
(1) Verbindungen der allgemeinen Formel (I)

   (A_{y}B_{y-1})_{2+δ}C_{w}DₓE_{z} (I)

   mit der Bedeutung
   A Mn oder Co,
   B Fe, Cr oder Ni,
   C, D, E mindestens zwei von C, D, E sind voneinander verschieden, haben eine nicht-verschwindende Konzentration und sind ausgewählt aus P, B, Se, Ge, Ga, Si, Sn, N, As und Sb, wobei mindestens eines von C, D und E Ge oder Si ist,
   δ Zahl im Bereich von - 0,1 bis 0,1
   w, x, y, z Zahlen im Bereich von 0 bis 1, wobei w + x + z = 1 ist;
(2) auf La und Fe basierenden Verbindungen der allgemeinen Formeln (II) und/oder (III) und/oder (IV)

   La(FeₓAl₁₋ₓ)₁₃H_{y} oder La(FeₓSi₁₋ₓ)₁₃H_{y} (II)

   mit
   - x: Zahl von 0,7 bis 0,95
   - y: Zahl von 0 bis 3, vorzugsweise 0 bis 2;

   La(FeₓAl_{y}Co_{z})₁₃ oder La(FeₓSi_{y}Co_{z})₁₃ (III)

   mit
   - x: Zahl von 0,7 bis 0,95
   - y: Zahl von 0,05 bis 1 - x
   - z: Zahl von 0,005 bis 0,5;

   LaMnₓFe₂₋ₓGe (IV)

   mit
   - x: Zahl von 1,7 bis 1,95 und
(3) Heusler-Legierungen des Typs MnTP mit T Übergangsmetall und P einem p-dotierenden Metall mit einem elextron count pro Atom e/a im Bereich von 7 bis 8,5,
(4) auf Gd und Si basierenden Verbindungen der allgemeinen Formel (V) Gd

   ₅(SiₓGe₁₋ₓ)₄ (V)

   mit x Zahl von 0,2 bis 1,
(5) Fe₂P-basierten Verbindungen,
(6) Manganiten des Perovskit-Typs,
(7) Seltenerden-Elemente enthaltenden Verbindungen der allgemeinen Formeln (VI) und (VII)

   Tb₅(Si₄₋ₓGeₓ) (VI)

   mit x = 0, 1, 2, 3, 4

   XTiGe (VII)

   mit X = Dy, Ho, Tm,
(8) auf Mn und Sb oder As basierenden Verbindungen der allgemeinen Formeln (VIII) und (IX)

   Mn₂₋ₓZₓSb (VIII)

   Mn₂ZₓSb₁₋ₓ (IX)

   mit
   - Z: Cr, Cu, Zn, Co, V, As, Ge,
   - x: 0,01 bis 0,5,
   wobei Sb durch As ersetzt sein kann, sofern Z nicht As ist.

Es wurde erfindungsgemäß gefunden, dass die vorstehenden thermomagnetischen Materialien vorteilhaft in Wärmetauschern, der magnetischen Kühlung, Wärmepumpen oder thermomagnetischen Generatoren oder Regeneratoren eingesetzt werden können, wenn sie eine erfindungsgemäße Struktur aufweisen.

Besonders bevorzugt sind erfindungsgemäß die metallbasierten Materialien ausgewählt aus den Verbindungen (1), (2) und (3) sowie (5).

Erfindungsgemäß besonders geeignete Materialien sind beispielsweise in WO 2004/068512, Rare Metals, Vol. 25, 2006, Seiten 544 bis 549, J. Appl. Phys. 99,08Q107 (2006), Nature, Vol. 415, 10. Januar 2002, Seiten 150 bis 152 und Physica B 327 (2003), Seiten 431 bis 437 beschrieben.

In den vorstehend genannten Verbindungen der allgemeinen Formel (I) sind bevorzugt C, D und E identisch oder unterschiedlich und ausgewählt aus mindestens einem von P, Ge, Si, Sn und Ga.

Das thermomagnetische Material der allgemeinen Formel (I) ist vorzugsweise ausgewählt aus mindestens quarternären Verbindungen, die neben Mn, Fe, P und gegebenenfalls Sb zudem Ge oder Si oder As oder Ge und Si, Ge und As oder Si und As oder Ge, Si und As enthalten.

Bevorzugt sind mindestens 90 Gew.-%, besonders bevorzugt mindestens 95 Gew.-% der Komponente A Mn. Bevorzugt sind mindestens 90 Gew.-%, besonders bevorzugt mindestens 95 Gew.-% von B Fe. Bevorzugt sind mindestens 90 Gew.-%, besonders bevorzugt mindestens 95 Gew.-% von C P. Bevorzugt sind mindestens 90 Gew.-%, besonders bevorzugt mindestens 95 Gew.-% von D Ge. Bevorzugt sind mindestens 90 Gew.-%, besonders bevorzugt mindestens 95 Gew.-% von E Si.

Vorzugsweise hat das Material die allgemeine Formel MnFe(P_{w}GeₓSi_{z}).

Bevorzugt ist x eine Zahl im Bereich von 0,3 bis 0,7, w ist kleiner oder gleich 1-x und z entspricht 1-x-w.

Das Material hat vorzugsweise die kristalline hexagonale Fe₂P-Struktur. Beispiele geeigneter Strukturen sind MnFeP_{0,45 bis 0,7}, Ge_{0,55 bis 0,30} und MnFeP_{0,5 bis 0,70}, (Si/Ge)_{0,5 bis 0,30}.

Geeignete Verbindungen sind ferner Mₙ₁₊ₓFe₁₋ₓP_{1-y}Ge_{y} mit x im Bereich von -0,3 bis 0,5, y im Bereich von 0,1 bis 0,6. Ebenfalls geeignet sind Verbindungen der allgemeinen Formel Mn₁₊ₓFe₁₋ₓP_{1-y}Ge_{y-z}Sb_{z} mit x im Bereich von -0,3 bis 0,5, y im Bereich von 0,1 bis 0,6 und z kleiner als y und kleiner als 0,2. Ferner sind Verbindungen der Formel Mn₁₊xFe₁₋ₓP_{1-y}Ge_{y-z}Si_{z} geeignet mit x Zahl im Bereich von 0,3 bis 0,5, y im Bereich von 0,1 bis 0,66, z kleiner oder gleich y und kleiner als 0,6.

Geeignet sind ferner weitere Fe₂P-basierte Verbindungen ausgehend von Fe₂P und FeAs₂, gegebenenfalls Mn und P. Sie entsprechen beispielsweise den allgemeinen Formeln MnFe₁₋ₓCoₓGe, mit x = 0,7 - 0,9, Mn₅₋ₓFeₓSi₃ mit x = 0 - 5, Mn₅Ge₃₋ₓSiₓ mit x = 0,1 - 2, Mn₅Ge₃₋ₓSbₓ mit x = 0 - 0,3, Mn₂₋ₓFeₓGe₂ mit x = 0,1 - 0,2, Mn₃₋ₓCoₓGaC mit x = 0 - 0,05.

Bevorzugte auf La und Fe basierende Verbindungen der allgemeinen Formeln (II) und/oder (III) und/oder (IV) sind La(Fe_{0,90}Si_{0,10})₁₃, La(Fe_{0,89}Si_{0,11})₁₃, La(Fe_{0,880}Si_{0,120})₁₃, La(Fe_{0,877}Si_{0,123})₁₃, LaFe_{11,8}Si_{1,2}, La(Fe_{0,88}Si_{0,12})₁₃H_{0,5}, La(Fe_{0,88}Si_{0,12})₁₃H_{1,0}, LaFe_{11,7}Si_{1,3}H_{1,1}, LaFe_{11,57}Si_{1,43}H_{1,3}, La(Fe_{0,88}Si_{0,12})H_{1,5}, LaFe_{11,2}Co_{0,7}Si_{1,1}, LaFe_{11,5}Al_{1,5}C_{0,1}, LaFe_{11,5}Al_{1,5}C_{0,2}, LaFe_{11,5}Al_{1,5}C_{0,4}, LaFe_{11,5}Al_{1,5}Co_{0,5}, La(Fe_{0,94}Co_{0,06})_{11,83}Al_{1,17}, La(Fe_{0,92}Co_{0,08})_{11,83}Al_{1,17}.

Geeignete Mangan enthaltende Verbindungen sind MnFeGe, MnFe_{0,9}Co_{0,1}Ge, MnFe_{0,8}Co_{0,2}Ge, MnFe_{0,7}Co_{0,3}Ge, MnFe_{0,6}Co_{0,4}Ge, MnFe_{0,5}Co_{0,5}Ge, MnFe_{0,4}Co_{0,6}Ge, MnFe_{0,3}Co_{0,7}Ge, MnFe_{0,2}Co_{0,8}Ge, MnFe_{0,15}Co_{0,85}Ge, MnFe_{0,1}Co_{0,9}Ge, MnCoGe, Mn₅Ge_{2,5}Si_{0,5}, Mn₅Ge₂Si, Mn₅Ge_{1,5}Si_{1,5}, Mn₅GeSi₂, Mn₅Ge₃, Mn₅Ge_{2,9}Sb_{0,1}, Mn₅Ge_{2,8}Sb_{0,2}, Mn₅Ge_{2,7}Sb_{0,3}, LaMn_{1,9}Fe_{0,1}Ge, LaMn_{1,85}Fe_{0,15}Ge, LaMn_{1,8}Fe_{0,2}Ge, (Fe_{0,9}Mn_{0,1})₃C, (Fe_{0,8}Mn_{0,2})₃C, (Fe_{0,7}Mn_{0,3})₃C, Mn₃GaC, MnAs, (Mn, Fe)As, Mn_{1+δ}As_{0,8}Sb_{0,2}, MnAs_{0,75}Sb_{0,25}, Mn_{1,1}As_{0,75}Sb_{0,25}, Mn_{1,5}As_{0,75}Sb_{0,25}.

Erfindungsgemäß geeignete Heusler-Legierungen sind beispielsweise Ni₂MnGa, Fe₂MnSi₁₋ₓGeₓ mit x = 0 - 1 wie Fe₂MnSi_{0,5}Ge_{0,5}, Ni_{52,9}Mn_{22,4}Ga_{24,7}, Ni_{50,9}Mn_{24,7}Ga_{24,4}, Ni_{55,2}Mn_{18,6}Ga_{26,2}, Ni_{51,6}Mn_{24,7}Ga_{23,8}, Ni_{52,7}Mn_{23,9}Ga_{23,4}, CoMnSb, CoNb_{0,2}Mn_{0,8}Sb, CoNb_{0,4}Mn_{0,6}SB, CoNb_{0,6}Mn_{0,4}Sb, Ni₅₀Mn₃₅Sn₁₅, Ni₅₀Mn₃₇Sn₁₃, MnFeP_{0,45}As_{0,55}, MnFeP_{0,47}As_{0,53}, Mn_{1,1}Fe_{0,9}P_{0,47}As_{0,53}, MnFeP_{0,89-χ}Si_{χ}Ge_{0,11}, χ = 0,22, χ = 0,26, χ = 0,30, χ = 0,33.

Weiterhin geeignet sind Fe₉₀Zr₁₀, Fe₈₂Mn₈Zr₁₀, Co₆₆Nb₉Cu₁Si₁₂B₁₂, Pd₄₀Ni_{22,5}Fe_{17,5}P₂₀, FeMoSiBCuNb, Gd₇₀Fe₃₀, GdNiAl, NdFe₁₂B₆GdMn₂.

Manganite des Perovskit-Typs sind beispielsweise La_{0,6}Ca_{0,4}MnO₃, La_{0,67}Ca_{0,33}MnO₃, La_{0,8}Ca_{0,2}MnO₃, La_{0,7}Ca_{0,3}MnO₃, La_{0,958}Li_{0,025}Ti_{0,1}Mn_{0,9}O₃, La_{0,65}Ca_{0,35}Ti_{0,1}Mn_{0,9}O₃, La_{0,799}Na_{0,199}MnO_{2,97}, La_{0,33}Na_{0,099}Mn_{0,977}O₃, La_{0,877}K_{0,096}Mn_{0,974}O₃, La_{0,65}Sr_{0,35}Mn_{0,95}Cn_{0,05}O₃, La_{0,7}Nd_{0,1}Na_{0,2}MnO₃, La_{0,5}Ca_{0,3}Sr_{0,2}MnO₃.

Auf Gd und Si basierende Verbindungen der allgemeinen Formel (V)

Gd₅(SiₓGe₁₋ₓ)₄

mit x Zahl von 0,2 bis 1
sind beispielsweise Gd₅(Si_{0,5}Ge_{0,5})₄, Gd₅(Si_{0,425}Ge_{0,575})₄, Gd₅(Si_{0,45}Ge_{0,55})₄, Gd₅(Si_{0,365}Ge_{0,635})₄, Gd₅(Si_{0,3}Ge_{0,7})₄, Gd₅(Si_{0,25}Ge_{0,75})₄.

Seltenerden-Elemente enthaltende Verbindungen sind Tb₅(Si₄₋ₓGeₓ) mit x = 0, 1, 2, 3, 4 oder XTiGe mit X = Dy, Ho, Tm, beispielsweise Tb₅Si₄, Tb₅(Si₃Ge), Tb(Si₂Ge₂), Tb₅Ge₄, DyTiGe, HoTiGe, TmTiGe.

Auf Mn und Sb oder As basierende Verbindungen der allgemeinen Formeln (VIII) und (IX) haben bevorzugt die Bedeutungen z = 0,05 bis 0,3, Z = Cr, Cu, Ge, As, Co.

Die erfindungsgemäß eingesetzten thermomagnetischen Materialien können in beliebiger geeigneter Weise hergestellt werden.

Die Herstellung der thermomagnetischen Materialien erfolgt beispielsweise durch Festphasenumsetzung der Ausgangselemente oder Ausgangslegierungen für das Material in einer Kugelmühle, nachfolgendes Verpressen, Sintern und Tempern unter Inertgasatmosphäre und nachfolgendes langsames Abkühlen auf Raumtemperatur. Ein derartiges Verfahren ist beispielsweise in J. Appl. Phys. 99, 2006, 08Q107 beschrieben.

Auch eine Verarbeitung über das Schmelzspinnen ist möglich. Hierdurch ist eine homogenere Elementverteilung möglich, die zu einem verbesserten magnetokalorischen Effekt führt, vergleiche Rare Metals, Vol. 25, Oktober 2006, Seiten 544 bis 549. In dem dort beschriebenen Verfahren werden zunächst die Ausgangselemente in einer Argongas-Atmosphäre induktionsgeschmolzen und sodann in geschmolzenem Zustand über eine Düse auf eine sich drehende Kupferwalze gesprüht. Es folgt ein Sintern bei 1000 °C und ein langsames Abkühlen auf Raumtemperatur.

Ferner kann für die Herstellung auf WO 2004/068512 verwiesen werden.

Die nach diesen Verfahren erhaltenen Materialien zeigen häufig eine große thermische Hysterese. Beispielsweise werden in Verbindungen des Fe₂P-Typs, die mit Germanium oder Silicium substituiert sind, große Werte für die thermische Hysterese in einem großen Bereich von 10 K oder mehr beobachtet.

Bevorzugt ist daher ein Verfahren zur Herstellung der thermomagnetischen Materialien, umfassend die folgenden Schritte:
a) Umsetzung von chemischen Elementen und/oder Legierungen in einer Stöchiometrie, die dem metallbasierten Material entspricht, in der Fest- und/oder Flüssigphase,
b) gegebenenfalls Überführen des Umsetzungsproduktes aus Stufe a) in einen Festkörper,
c) Sintern und/oder Tempern des Festkörpers aus Stufe a) oder b),
d) Abschrecken des gesinterten und/oder getemperten Festkörpers aus Stufe c) mit einer Abkühlgeschwindigkeit von mindestens 100 K/s.

Die thermische Hysterese kann signifikant vermindert werden und ein großer magnetokalrischer Effekt kann erreicht werden, wenn die metallbasierten Materialien nach dem Sintern und/oder Tempern nicht langsam auf Umgebungstemperatur abgekühlt werden, sondern mit einer hohen Abkühlgeschwindigkeit abgeschreckt werden. Dabei beträgt die Abkühlgeschwindigkeit mindestens 100 K/s. Bevorzugt beträgt die Abkühlgeschwindigkeit 100 bis 10000 K/s, besonders bevorzugt 200 bis 1300 K/s. Speziell bevorzugt sind Abkühlgeschwindigkeiten von 300 bis 1000 K/s.

Das Abschrecken kann dabei durch beliebige geeignete Kühlverfahren erreicht werden, beispielsweise durch Abschrecken des Festkörpers mit Wasser oder wasserhaltigen Flüssigkeiten, beispielsweise gekühltem Wasser oder Eis/Wasser-Mischungen. Die Festkörper können beispielsweise in eisgekühltes Wasser fallengelassen werden. Es ist ferner möglich, die Festkörper mit untergekühlten Gasen wie flüssigem Stickstoff abzuschrecken. Weitere Verfahren zum Abschrecken sind dem Fachmann bekannt. Vorteilhaft ist dabei ein kontrolliertes und schnelles Abkühlen.

Die übrige Herstellung der thermomagnetischen Materialien ist weniger kritisch, solange im letzten Schritt das Abschrecken des gesinterten und/oder getemperten Festkörpers mit der erfindungsgemäßen Abkühlgeschwindigkeit erfolgt. Das Verfahren kann dabei auf die Herstellung beliebiger geeigneter thermomagnetischer Materialien für die magnetische Kühlung angewendet werden, wie sie vorstehend beschreiben sind.

In Schritt (a) des Verfahrens erfolgt die Umsetzung der Elemente und/oder Legierungen, die im späteren thermomagnetischen Material enthalten sind, in einer Stöchiometrie, die dem thermomagnetischen Material entspricht, in der Fest- oder Flüssigphase.

Vorzugsweise wird die Umsetzung in Stufe a) durch gemeinsames Erhitzen der Elemente und/oder Legierungen in einem geschlossenen Behältnis oder in einem Extruder, oder durch Festphasenumsetzung in einer Kugelmühle erfolgen. Besonders bevorzugt wird eine Festphasenumsetzung durchgeführt, die insbesondere in einer Kugelmühle erfolgt. Eine derartige Umsetzung ist prinzipiell bekannt, vergleiche die vorstehend aufgeführten Schriften. Dabei werden typischerweise Pulver der einzelnen Elemente oder Pulver von Legierungen aus zwei oder mehr der einzelnen Elemente, die im späteren thermomagnetischen Material vorliegen, in geeigneten Gewichtsanteilen pulverförmig vermischt. Falls notwendig, kann zusätzlich ein Mahlen des Gemisches erfolgen, um ein mikrokristallines Pulvergemisch zu erhalten. Dieses Pulvergemisch wird vorzugsweise in einer Kugelmühle aufgeheizt, was zu einer weiteren Verkleinerung wie auch guten Durchmischung und zu einer Festphasenreaktion im Pulvergemisch führt. Alternativ werden die einzelnen Elemente in der gewählten Stöchiometrie als Pulver vermischt und anschließend aufgeschmolzen.

Das gemeinsame Erhitzen in einem geschlossenen Behälter erlaubt die Fixierung flüchtiger Elemente und die Kontrolle der Stöchiometrie. Gerade bei Mitverwendung von Phosphor würde dieser in einem offenen System leicht verdampfen.

An die Umsetzung schließt sich ein Sintern und/oder Tempern des Festkörpers an, wobei ein oder mehrere Zwischenschritte vorgesehen sein können. Beispielsweise kann der in Stufe a) erhaltene Feststoff einer Formgebung unterzogen werden, bevor er gesintert und/oder getempert wird.

Alternativ ist es möglich, den aus der Kugelmühle erhaltenen Feststoff einem Schmelzspinnverfahren zuzuführen. Schmelzspinnverfahren sind an sich bekannt und beispielsweise in Rare Metals, Vol. 25, Oktober 2006, Seiten 544 bis 549 wie auch in WO 2004/068512 beschrieben.

Dabei wird die in Stufe a) erhaltene Zusammensetzung geschmolzen und auf eine sich drehende kalte Metallwalze gesprüht. Dieses Sprühen kann mittels Überdruck vor der Sprühdüse oder Unterdruck hinter der Sprühdüse erreicht werden. Typischerweise wird eine sich drehende Kupfertrommel oder -walze verwendet, die zudem gegebenenfalls gekühlt werden kann. Die Kupfertrommel dreht sich bevorzugt mit einer Oberflächengeschwindigkeit von 10 bis 40 m/s, insbesondere 20 bis 30 m/s. Auf der Kupfertrommel wird die flüssige Zusammensetzung mit einer Geschwindigkeit von vorzugsweise 10² bis 10⁷ K/s abgekühlt, besonders bevorzugt mit einer Geschwindigkeit von mindestens 10⁴ K/s, insbesondere mit einer Geschwindigkeit von 0,5 bis 2 x 10⁶ K/s.

Das Schmelzspinnen kann wie auch die Umsetzung in Stufe a) unter vermindertem Druck oder unter Inertgasatmosphäre durchgeführt werden.

Durch das Meltspinning wird eine hohe Verarbeitungsgeschwindigkeit erreicht, da das nachfolgende Sintern und Tempern verkürzt werden kann. Gerade im technischen Maßstab wird so die Herstellung der thermomagnetischen Materialien wesentlich wirtschaftlicher. Auch die Sprühtrocknung führt zu einer hohen Verarbeitungsgeschwindigkeit. Besonders bevorzugt wird das Schmelzespinnen (Meltspinning) durchgeführt.

Alternativ kann in Stufe b) ein Sprühkühlen durchgeführt werden, bei dem eine Schmelze der Zusammensetzung aus Stufe a) in einen Sprühturm gesprüht wird. Der Sprühturm kann dabei beispielsweise zusätzlich gekühlt werden. In Sprühtürmen werden häufig Abkühlgeschwindigkeiten im Bereich von 10³ bis 10⁵ K/s, insbesondere etwa 10⁴ K/s erreicht.

Das Sintern und/oder Tempern des Festkörpers erfolgt in Stufe c) vorzugsweise zunächst bei einer Temperatur im Bereich von 800 bis 1400 °C zum Sintern und nachfolgend bei einer Temperatur im Bereich von 500 bis 750 °C zum Tempern. Beispielsweise kann dann das Sintern bei einer Temperatur im Bereich von 500 bis 800 °C erfolgen. Für Formkörper/Festkörper erfolgt das Sintern besonders bevorzugt bei einer Temperatur im Bereich von 1000 bis 1300 °C, insbesondere von 1100 bis 1300 °C. Das Tempern kann dann beispielsweise bei 600 bis 700 °C erfolgen.

Das Sintern wird vorzugsweise für einen Zeitraum von 1 bis 50 Stunden, besonders bevorzugt 2 bis 20 Stunden, insbesondere 5 bis 15 Stunden durchgeführt. Das Tempern wird vorzugsweise für eine Zeit im Bereich von 10 bis 100 Stunden, besonders bevorzugt 10 bis 60 Stunden, insbesondere 30 bis 50 Stunden durchgeführt. Die exakten Zeiträume können dabei je nach Material den praktischen Anforderungen angepasst werden.

Bei Einsatz des Schmelzspinnverfahrens kann der Zeitraum für ein Sintern oder Tempern stark verkürzt werden, beispielsweise auf Zeiträume von 5 Minuten bis 5 Stunden, bevorzugt 10 Minuten bis 1 Stunde. Im Vergleich zu den sonst üblichen Werten von 10 Stunden für das Sintern und 50 Stunden für das Tempern resultiert ein extremer Zeitvorteil.

Durch das Sintern/Tempern kommt es zu einem Anschmelzen der Korngrenzen, so dass sich das Material weiter verdichtet.

Durch das Schmelzen und schnelle Abkühlen in Stufe b) kann damit die Zeitdauer für Stufe c) erheblich vermindert werden. Dies ermöglicht auch eine kontinuierliche Herstellung der thermomagnetischen Materialien.

Das Verpressen kann beispielsweise als kaltes Verpressen oder als Heißverpressen durchgeführt werden. An das Verpressen kann sich das bereits beschriebene Sinterverfahren anschließen.

Beim Sinterverfahren oder Sintermetallverfahren werden die Pulver des thermomagnetischen Materials zunächst in die gewünschte Form des Formkörpers gebracht, und sodann durch Sintern miteinander verbunden, wodurch der gewünschte Formkörper erhalten wird. Das Sintern kann ebenfalls wie vorstehend beschrieben durchgeführt werden.

Ferner ist es erfindungsgemäß möglich, das Pulver des thermomagnetischen Materials in ein polymeres Bindemittel einzubringen, die resultierende thermoplastische Formmasse einer Formgebung zu unterziehen, das Bindemittel zu entfernen und den resultierenden Grünkörper zu sintern. Es ist auch möglich, das Pulver des thermomagnetischen Materials mit einem polymeren Bindemittel zu beschichten und durch Verpressen, gegebenenfalls unter Wärmebehandlung, einer Formgebung zu unterziehen.

Es können erfindungsgemäß dabei beliebige geeignete organische Bindemittel eingesetzt werden, die als Bindemittel für thermomagnetische Materialien einsetzbar sind. Dabei handelt es sich insbesondere um oligomere oder polymere Systeme, jedoch können auch niedermolekulare organische Verbindungen wie beispielsweise Zucker eingesetzt werden.

Das thermomagnetische Pulver wird mit einem der geeigneten organischen Bindemittel vermischt und in eine Form gefüllt. Dies kann beispielsweise durch Gießen oder Spritzgießen oder durch Extrusion erfolgen. Sodann wird das Polymer katalytisch oder thermisch entfernt und soweit gesintert, dass ein poröser Körper mit Monolith-Struktur gebildet wird.

Auch eine Heißextrusion oder ein Metallspritzguss (MIM) des thermomagnetischen Materials ist möglich, ebenso wie ein Aufbau aus dünnen Blechen, die durch Walzverfahren zugänglich sind. Beim Spritzgießen weisen die Kanäle im Monolithen eine konische Form auf, um die Gusskörper aus der Form entfernen zu können. Beim Aufbau aus Blechen können alle Kanalwandungen parallel verlaufen.

Die jeweiligen Verfahren werden so gesteuert, dass Wärmetauscherbetten resultieren, die eine geeignete Kombination aus hoher Wärmeübertragung, geringem Durchflusswiderstand und hoher magnetokalorischer Dichte aufweisen. Bevorzugt ist dabei ein optimales Verhältnis von hoher magnetokalorischer Dichte und ausreichender Porosität, so dass eine effiziente Wärmeabführung bzw. ein effizienter Wärmetausch gewährleistet sind. Anders ausgedrückt zeigen die erfindungsgemäßen Formkörper ein hohes Verhältnis von Oberfläche zu Volumen. Durch die große Oberfläche ist es möglich, große Wärmemengen aus dem Material herauszutransportieren und in ein Wärmeüberträgermedium einzubringen. Die Struktur sollte mechanisch stabil sein, um den mechanischen Belastungen durch ein fluides Kühlmedium gewachsen zu sein. Zudem sollte der Fließwiderstand so gering sein, dass nur ein geringer Druckabfall durch das poröse Material resultiert. Das magnetische Feldvolumen sollte vorzugsweise minimiert werden.

Stapel von Wärmetauscherbetten oder Monolithen können durch entsprechende Zwischenlagen gegeneinander thermisch isoliert werden, z. B. durch Kohlenstoffsiebe. Hierdurch werden Wärmeverluste durch Wärmeleitung im Material verhindert. Durch entsprechende Auslegung können die Zwischenlagen auch zur gleichmäßigen Verteilung des Wärmetauschermediums dienen.

Die erfindungsgemäß erhaltenen Wärmetauscherbetten werden bevorzugt in Kühlschränken, Klimaanlagen, Wärmepumpen bzw. Wärmetauschern oder in der Stromerzeugung durch direkte Umwandlung von Wärme verwendet. Dabei sollten die Materialien einen großen magnetokalorischen Effekt in einem Temperaturintervall zwischen -100 °C und +150 °C zeigen.

Die Wärmeübergangsrate limitiert die Zyklusgeschwindigkeit und hat damit einem großen Einfluss auf die Leistungsdichte.

Bei der Stromgewinnung ist um das thermomagnetische Material eine Spule aus einem elektrisch leitfähigen Material angeordnet. In dieser Spule wird durch Veränderung des Magnetfeldes bzw. der Magnetisierung ein Strom induziert, der zur Verrichtung von elektrischer Arbeit verwendet werden kann. Vorzugsweise werden dabei die Spulengeometrie und die Geometrie des thermomagnetischen Materials so gewählt, dass eine möglichst hohe Energieausbeute mit einem möglichst geringen Druckverlust resultiert. Die Spulenwindungsdichte (Windungen/Länge), die Spulenlänge, der Ladungswiderstand und die Temperaturveränderung des thermomagnetischen Materials sind wichtige Einflussgrößen für die Energieausbeute.

Das thermomagnetische Material befindet sich in einem äußeren Magnetfeld. Dieses Magnetfeld kann durch Permanentmagnete oder Elektromagnete erzeugt werden. Elektromagnete können herkömmliche Elektromagnete oder supraleitende Magnete sein.

Vorzugsweise ist der thermomagnetische Generator so ausgelegt, dass die Wärmeenergie aus der Geothermie oder aus der Abwärme industrieller Prozesse oder aus Solarenergie oder Sonnenkollektoren, z. B. in der Photovoltaik umgewandelt werden kann. Gerade in Regionen mit geothermischer Aktivität erlaubt der erfindungsgemäße thermomagnetische Generator eine einfache Stromerzeugung unter Ausnutzung der Erdwärme. In industriellen Prozessen fällt häufig Prozesswärme oder Abwärme an, die üblicherweise in die Umgebung abgeleitet und nicht weiter genutzt wird. Auch Abwässer weisen häufig eine höhere Temperatur beim Austritt als beim Eintritt auf. Gleiches gilt für Kühlwasser. Damit erlaubt der thermomagnetische Generator die Gewinnung von elektrischer Energie aus Abwärme, die ansonsten verloren geht. Dadurch, dass der thermomagnetische Generator im Bereich der Raumtemperatur betrieben werden kann, ist es möglich, diese Abwärmen zu nutzen und in elektrische Energie umzuwandeln. Die Energieumwandlung erfolgt dabei vorzugsweise bei Temperaturen im Bereich von 20 bis 150 °C, besonders bevorzugt bei Temperaturen im Bereich von 40 bis 120 °C.

In (konzentrierten) Photovoltaikanlagen werden häufig hohe Temperaturen erreicht, so dass gekühlt werden muss. Diese abzuführende Wärme kann erfindungsgemäß in Strom ungewandelt werden.

Zur Stromerzeugung wird das thermomagnetische Material abwechselnd mit einem warmen Reservoir und einem kalten Reservoir kontaktiert und damit einem Aufwärm- und Abkühlungszyklus unterworfen. Die Zykluszeit wird dabei nach den jeweiligen technischen Voraussetzungen gewählt.

Die nachfolgenden Beispiele beschreiben die Herstellung für die erfindungsgemäße Anwendung geeigneter thermomagnetischer Materialien und die Auslegung von Monolithen und Katalysatorbetten.

### Beispiele

### Beispiel 1

Evakuierte Quarzampullen, die gepresste Proben von MnFePGe enthielten, wurden für 10 Stunden bei 1100 °C gehalten, um das Pulver zu sintern. Auf dieses Sintern folgte ein Tempern bei 650 °C für 60 Stunden, um eine Homogenisierung herbeizuführen. Anstelle eines langsamen Abkühlens im Ofen auf Raumtemperatur wurden die Proben jedoch sofort in Wasser bei Raumtemperatur gequencht. Das Quenchen in Wasser verursachte einen gewissen Grad von Oxidation an den Probenoberflächen. Die äußere oxidierte Schale wurde durch Ätzen mit verdünnter Säure entfernt. Die XRD-Muster zeigen, dass alle Proben in einer Struktur des Fe₂P-Typs kristallisieren.

Folgende Zusammensetzungen wurden dabei erhalten:
Mn_{1,1}Fe_{0,9}P_{0,81}Ge_{0,19}; Mn_{1,1}Fe_{0,9}P_{0,78}Ge_{0,22}, Mn_{1,1}Fe_{0,9}P_{0,75}Ge_{0,25} und Mn_{1,2}Fe_{0,8}P_{0,81}Ge_{0,19}. Die beobachteten Werte für die thermische Hysterese sind für diese Proben in der angegebenen Reihenfolge 7 K, 5 K, 2 K und 3 K. Gegenüber einer langsam abgekühlten Probe war die eine thermische Hysterese von mehr als 10 K aufweist, konnte die thermische Hysterese stark vermindert werden.

Die thermische Hysterese wurde dabei in einem Magnetfeld von 0,5 Tesla bestimmt.

Die Curie-Temperatur kann durch Variation des Mn/Fe-Verhältnisses und der Ge-Konzentration eingestellt werden, ebenso der Wert für die thermische Hysterese.

Die Änderung der magnetischen Entropie, berechnet aus der Gleichstrommagnetisierung unter Verwendung der Maxwell-Beziehung beträgt für eine maximale Feldänderung von 0 bis 2 Tesla für die ersten drei Proben 14 J/kgK, 20 J/kgK bzw. 12,7 J/kgK.

Die Curie-Temperatur und die thermische Hysterese nehmen mit zunehmendem Mn/Fe-Verhältnis ab. Im Ergebnis zeigen die MnFePGe-Verbindungen relativ große MCE-Werte in niedrigem Feld. Die thermische Hysterese dieser Materialien ist sehr klein.

### Beispiel 2

### Schmelzspinnen von MnFeP(GeSb)

Die polykristallinen MnFeP(Ge,Sb)-Legierungen wurden zunächst in einer Kugelmühle mit hohem Energie-Eintrag und durch Festphasenreaktionsverfahren hergestellt, wie sie in WO 2004/068512 und J. Appl. Phys. 99,08 Q107 (2006) beschrieben sind. Die Materialstücke wurden sodann in ein Quarzrohr mit einer Düse gegeben. Die Kammer wurde auf ein Vakuum von 10⁻² mbar evakuiert und anschließend mit Argongas hoher Reinheit gefüllt. Die Proben wurden durch Hochfrequenz geschmolzen und durch die Düse versprüht aufgrund einer Druckdifferenz zu einer Kammer mit einer rotierenden Kupfertrommel. Die Oberflächengeschwindigkeit des Kupferrades konnte eingestellt werden, und Abkühlgeschwindigkeiten von etwa 10⁵ K/s wurden erreicht. Anschließend wurden die gesponnenen Bänder bei 900 °C für eine Stunde getempert.

Aus der Röntgendiffraktometrie geht hervor, dass alle Proben im hexagonalen Fe₂P-Strukturmuster kristallisieren. Im Unterschied zu nicht nach dem Schmelzspinnverfahren hergestellten Proben, wurde keine kleinere Verunreinigungsphase von MnO beobachtet.

Die erhaltenen Werte für die Curie-Temperatur, die Hysterese und die Entropie wurden für unterschiedliche Umfangsgeschwindigkeiten beim Schmelzspinnen bestimmt. Die Ergebnisse sind in den nachstehenden Tabellen 1 und 2 aufgeführt. Jeweils wurden geringe Hysterese-Temperaturen bestimmt.

**Tabelle 1:**

| **Bänder** | **V (m/s)** | **T_{C} (K)** | **ΔT_{hys} (K)** | **-ΔS(J/kgK)** |
|---|---|---|---|---|
| Mr_{1,2}Fe_{0,8}P_{0,73}Ge_{0,25}Sb_{0,02} | 30 | 269 | 4 | 12,1 |
| Mn_{1,2}Fe_{0,8}P_{0,70}Ge_{0,20}Sb_{0,10} | 30 | 304 | 4,5 | 19,0 |
| | 45 | 314 | 3 | 11,0 |
| MnFeP_{0,70}Ge_{0,20}Sb_{0,10} | 20 | 306 | 8 | 17,2 |
| | 30 | 340 | 3 | 9,5 |
| MnFeP_{0,75}Ge_{0,25} | 20 | 316 | 9 | 13,5 |
| | 40 | 302 | 8 | - |
| Mn_{1,1}Fe_{0,9}P_{0,78}Ge_{0,22} | 20 | 302 | 5 | - |
| | 40 | 299 | 7 | - |
| Mn_{1,1}Fe_{0,9}P_{0,75}Ge_{0,25} | 30 | 283 | 9 | 11,2 |
| Mn_{1,2}Fe_{0,8}P_{0,75}Ge_{0,25} | 30 | 240 | 8 | 14,2 |
| Mn_{1,1}Fe_{0,9}P_{0,73}Ge_{0,27} | 30 | 262 | 5 | 10,1 |

| **Bulk** | | **T_{C} (K)** | **ΔT_{hys} (K)** | **-ΔS(J/kgK)** |
|---|---|---|---|---|
| MnFeP_{0,75}Ge_{0,25} | | 327 | 3 | 11,0 |
| Mn_{1,1}Fe_{0,9}P_{0,81}Ge_{0,19} | | 260 | 7 | 14,0 |
| Mn_{1,1}Fe_{0,9}P_{0,78}Ge_{0,22} | | 296 | 5 | 20,0 |
| Mn_{1,1}Fe_{0,9}P_{0,75}Ge_{0,25} | | 330 | 2 | 13,0 |
| Mn_{1,2}Fe_{0,8}P_{0,81}Ge_{0,19} | | 220 | 3 | 7,7 |
| Mn_{1,2}Fe_{0,8}P_{0,75}Ge_{0,25} | | 305 | 3 | - |
| Mn_{1,2}Fe_{0,8}P_{0,73}Ge_{0,27} | | 313 | 5 | - |
| Mn_{1,3}Fe_{0,7}P_{0,78}Ge_{0,22} | | 203 | 3 | 5,1 |
| Mn_{1,3}Fe_{0,7}P_{0,75}Ge_{0,25} | | 264 | 1 | - |

**Tabelle 2**

| **Bulk** | **T_{C} (K)** | **ΔT_{hys} (K)** | **-ΔS(J/kgK)** |
|---|---|---|---|
| MnFeP_{0,75}Ge_{0,25} | 327 | 3 | 11,0 |
| Mn_{1,16}Fe_{0,84}P_{0,75}Ge_{0,25} | 330 | 5 | 22,5 |
| Mn_{1,18}Fe_{0,82}P_{0,75}Ge_{0,25} | 310 | 3 | 16,1 |
| Mr_{1,20}Fe_{0,80}P_{0,75}Ge_{0,25} | 302 | 1 | 12,0 |
| Mr_{1,22}Fe_{0,78}P_{0,75}Ge_{0,25} | 276 | 4 | 11,7 |
| Mn_{1,26}Fe_{0,74}P_{0,75}Ge_{0,25} | 270 | 1 | 8,5 |
| Mr_{1,1}Fe_{0,9}P_{0,81}Ge_{0,19} | 260 | 6 | 13,8 |
| Mn_{1,1}Fe_{0,9}P_{0,78}Ge_{0,22} | 296 | 4 | 20,0 |
| Mn_{1,1}Fe_{0,9}P_{0,77}Ge_{0,23} | 312 | 2 | 14,6 |
| Mn_{1,1}Fe_{0,9}P_{0,75}Ge_{0,25} | 329 | 2 | 13,0 |

| **Bänder** | | | |
|---|---|---|---|
| Mn_{1,20}Fe_{0,80}P_{0,75}Ge_{0,25} | 288 | 1 | 20,3 |
| Mr_{1,22}Fe_{0,78}P_{0,75}G_{0,25} | 274 | 2 | 15,3 |
| Mr_{1,24}Fe_{0,76}P_{0,75}Ge_{0,25} | 254 | 2 | 16,4 |
| Mn_{1,26}Fe_{0,74}P_{0,75}Ge₀,₂₅ | 250 | 4 | 14,4 |
| Mn_{1,30}Fe_{0,70}P_{0,75}Ge_{0,25} | 230 | 0 | 9,8 |

### Beispiel 3

Ein einfacher magnetokalorischer Regenerator, aufgebaut aus einem gepackten oder strukturierten Bett einer Kaskade von magnetokalorischen Materialien, einer Magnetanordnung und einem Wärmetransferfluid wurde mit den folgenden Ergebnissen untersucht:

### 1. Für vorgegebene Betriebsbedingungen:

| Form des magnetokalorischen Materials | Leistung (W) | Druckverlust (Pa) |
|---|---|---|
| Kugeln, d = 0,3 mm | 160,5 | 1,8 x 10⁴ |
| Kugeln, d = 0,05 mm | 162,9 | 5,6 x 10⁵ |
| Kugeln, d = 0,03 mm | 163,0 | 1,52 × 10⁶ |
| Monolith, Kanäle mit quadratischem Querschnitt, Seitenlänge 0,3 mm | 154,6 | 1,71 x 10³ |
| Zylinder, d = h = 5 mm | Wärmetransfer zu langsam, um einen Temperaturgradienten aufzubauen | |
| Zylinder, d = h = 0,5 mm | 154,3 | 9,11 x 10³ |

Es ist ersichtlich, dass Kugeln mit 0,3 mm Durchmesser und der Monolith gute Wärmetransferleistungen ergeben, wobei nur geringe Druckverluste auftraten (insbesondere im Monolithen).

### 2. Für Betrieb bei unterschiedlichen Frequenzen (wobei alle anderen Betriebsbedingungen gleich bleiben):

In der nachstehenden Tabelle ist die Nettoleistung (das ist die Kühlleistung minus der Leistung, die für das Pumpen des Wärmetransferfluids benötigt wird) bei unterschiedlichen Betriebsfrequenzen aufgeführt:

| Form des magnetokalorischen Materials | Leistung bei unterschiedlichen Betriebsfrequenzen (W) | | |
|---|---|---|---|
| | 1 Hz | 5 Hz | 10 Hz |
| Monolithen, quadratische Kanäle, Seitenlänge 0,1 mm | 153,2 | 645,2 | 1024,6 |
| Monolithen, quadratische Kanäle, Seitenlänge 0,3 mm | 108,6 | 0* | 0* |
| Kugeln, d = 0,05 mm | 96,1 | 522,2 | 986,1 |
| Kugeln, d = 0,3 mm | 90,1 | 259,1 | 0* |

Bemerkung: 0* bedeutet, dass die für das Pumpen des Fluids erforderliche Leistung größer ist als die gewonnene Kühlleistung.

## Patentansprüche

1. Wärmetauscherbett aus einem thermomagnetischen Materialmonolithen,
**dadurch gekennzeichnet, dass**
der thermomagnetische Materialmonolith durchgehende Kanäle mit einer Querschnittsfläche der einzelnen Kanäle im Bereich von 0,01 bis 0,025 mm² und einer Wandstärke von 85 bis 150 µm aufweist, eine Porosität im Bereich von 10 bis 60 % hat und ein Verhältnis von Oberfläche zu Volumen im Bereich von 3000 bis 50000 m²/m³ hat.

2. Wärmetauscherbett nach Anspruch 1, **dadurch gekennzeichnet, dass** die Porosität 20 bis 30 % beträgt.

3. Wärmetauscherbett nach einem der Ansprüche 1 bis 2, **dadurch gekennzeichnet, dass**
das thermomagnetische Material ausgewählt ist aus
(1) Verbindungen der allgemeinen Formel (I)
(A_{y}B_{1-y})_{2+δ}C_{w}DₓE_{z} (I)
mit der Bedeutung
A Mn oder Co,
B Fe, Cr oder Ni,
C, D, E mindestens zwei von C, D, E sind voneinander verschieden, haben eine nicht-verschwindende Konzentration und sind ausgewählt aus P, B, Se, Ge, Ga, Si, Sn, N, As und Sb, wobei mindestens eines von C, D und E Ge oder Si ist,
δ Zahl im Bereich von - 0,1 bis 0,1
w, x, y, z Zahlen im Bereich von 0 bis 1, wobei w + x + z = 1 ist;
(2) auf La und Fe basierenden Verbindungen der allgemeinen Formeln (II) und/oder (III) und/oder (IV)
La(FeₓAl₁₋ₓ)₁₃H_{y} oder La(FeₓSi₁₋ₓ)₁₃H_{y} (II)
mit
x Zahl von 0,7 bis 0,95
y Zahl von 0 bis 3;
La(FeₓAl_{y}Co_{z})₁₃ oder La(FeₓSi_{y}Co_{z})₁₃ (III)
mit
x Zahl von 0,7 bis 0,95
y Zahl von 0,05 bis 1 - x
z Zahl von 0,005 bis 0,5;
LaMnₓFe₂₋ₓGe (IV)
mit
x Zahl von 1,7 bis 1,95 und
(3) Heusler-Legierungen des Typs MnTP mit T Übergangsmetall und P einem p-dotierenden Metall mit einem electron count pro Atom e/a im Bereich von 7 bis 8,5,
(4) auf Gd und Si basierenden Verbindungen der allgemeinen Formel (V)
Gd₅(SiₓGe₁₋ₓ)₄ (V)
mit x Zahl von 0,2 bis 1,
(5) Fe₂P-basierten Verbindungen,
(6) Manganiten des Perovskit-Typs,
(7) Seltenerden-Elemente enthaltenden Verbindungen der allgemeinen Formeln (VI) und (VII)
Tb₅(Si₄₋ₓGeₓ) (VI)
mit x = 0, 1, 2, 3, 4
XTiGe (VII)
mit X = Dy, Ho, Tm,
(8) auf Mn und Sb oder As basierenden Verbindungen der allgemeinen Formeln (VIII) und (IX)
Mn₂₋ₓZₓSb (VIII)
Mn₂ZₓSb₁₋ₓ (IX)
mit
Z Cr, Cu, Zn, Co, V, As, Ge,
x 0,01 bis 0,5,
wobei Sb durch As ersetzt sein kann, sofern Z nicht As ist.

4. Wärmetauscherbett nach Anspruch 3, **dadurch gekennzeichnet, dass** das thermomagnetische Material ausgewählt ist aus mindestens quarternären Verbindungen der allgemeinen Formel (I), die neben Mn, Fe, P und gegebenenfalls Sb zusätzlich Ge oder Si oder As oder Ge und Si oder Ge und As oder Si und As, oder Ge, Si und As enthalten.

5. Verfahren zur Herstellung von Wärmetauscherbetten nach einem der Ansprüche 1 bis 4, **gekennzeichnet durch** Extrudieren, Spritzgießen oder Formpressen des thermomagnetischen Materials zur Ausbildung des Monolithen.

6. Verwendung eines Wärmetauscherbettes nach einem der Ansprüche 1 bis 4 in Kühlschränken, Klimaanlagen, Wärmepumpen oder in der Stromerzeugung durch direkte Umwandlung von Wärme.

## Claims

1. A heat exchanger bed composed of a thermomagnetic material monolith, wherein the thermomagnetic material monolith has continuous channels with a cross-sectional area of the individual channels in the range from 0.01 to 0.025 mm² and a wall thickness of 85 to 150 µm, a porosity in the range from 10 to 60% and a ratio of surface to volume in the range from 3000 to 50 000 m²/m³.

2. The heat exchanger bed according to claim 1, wherein the porosity is 20 to 30%.

3. The heat exchanger bed according to any one of claims 1 to 2, wherein the thermomagnetic material is selected from
(1) compounds of the general formula (I)
(A_{y}B_{1-y})_{2+δ}C_{w}DₓE_{z} (I)
where
A is Mn or Co,
B is Fe, Cr or Ni,
C, D and E at least two of C, D and E are different, have a non-vanishing concentration and are selected from P, B, Se, Ge, Ga, Si, Sn, N, As and Sb, where at least one of C, D and E is Ge or Si,
δ is a number in the range from -0.1 to 0.1,
w, x, y, z are numbers in the range from 0 to 1, where w + x + z = 1;
(2) La- and Fe-based compounds of the general formulae (II) and/or (III) and/or (IV)
La(FeₓAl₁₋ₓ)₁₃H_{y} or La(FeₓSi₁₋ₓ)₁₃H_{y} (II)
where
x is a number from 0.7 to 0.95,
y is a number from 0 to 3;
La(FeₓAl_{y}Co_{z})₁₃ or La(FeₓSi_{y}Co_{z})₁₃ (III)
where
x is a number from 0.7 to 0.95,
y is a number from 0.05 to 1 - x,
z is a number from 0.005 to 0.5;
LaMnₓFe₂₋ₓGe (IV)
where
x is a number from 1.7 to 1.95 and
(3) Heusler alloys of the MnTP type where T is a transition metal and P is a p-doping metal having an electron count per atom e/a in the range from 7 to 8.5,
(4) Gd- and Si-based compounds of the general formula (V)
Gd₅ (SiₓGe₁₋ₓ)₄ (V)
where x is a number from 0.2 to 1,
(5) Fe₂P-based compounds,
(6) manganites of the perovskite type,
(7) compounds which comprise rare earth elements and are of the general formulae (VI) and (VII)
Tb₅(Si₄₋ₓGeₓ) (VI)
where x = 0, 1, 2, 3, 4,
XTiGe (VII)
where X = Dy, Ho, Tm,
(8) Mn- and Sb- or As-based compounds of the general formulae (VIII) and (IX)
Mn₂₋ₓZₓSb (VIII)
Mn₂ZₓSb₁₋ₓ (IX)
where
Z is Cr, Cu, Zn, Co, V, As, Ge,
x is from 0.01 to 0.5,
where Sb may be replaced by As when Z is not As.

4. The heat exchanger bed according to claim 3, wherein the thermomagnetic material is selected from at least quaternary compounds of the general formula (I) which, as well as Mn, Fe, P and optionally Sb, additionally comprise Ge or Si or As or Ge and Si or Ge and As or Si and As, or Ge, Si and As.

5. A process for producing heat exchanger beds according to any one of claims 1 to 4, **characterized by** extrusion, injection molding or molding of the thermomagnetic material to form the monolith.

6. The use of a heat exchanger bed according to any one of claims 1 to 4 in refrigerators, air conditioning units, heat pumps or in power generation by direct conversion of heat.

## Revendications

1. Lit échangeur de chaleur constitué d'un matériau monolithique thermomagnétique, **caractérisé en ce que** le matériau monolithique thermomagnétique présente des canaux traversants avec une surface en section transversale des canaux individuels de l'ordre de 0,01 à 0,025 mm² et une épaisseur de paroi de 85 à 150 µm, une porosité de l'ordre de 10 à 60 % et un rapport de la surface au volume de l'ordre de 3000 à 50000 m²/m³.

2. Lit échangeur de chaleur selon la revendication 1, **caractérisé en ce que** la porosité est de 20 à 30 %.

3. Lit échangeur de chaleur selon l'une quelconque des revendications 1 à 2, **caractérisé en ce que** le matériau thermomagnétique est choisi parmi
(1) les composés de formule générale (I)
(A_{y}B_{1-y})_{2+δ}C_{w}DₓE_{z} (I)
dans laquelle
A signifie Mn ou Co,
B signifie Fe, Cr ou Ni,
C, D, E au moins deux parmi C, D, E sont différents l'un de l'autre, présentent une concentration qui ne se dissipe pas et sont choisis parmi P, B, Se, Ge, Ga, Si, Sn, N, As et Sb, au moins l'un parmi C, D et E étant Ge ou Si,
δ signifie un nombre de la plage de -0,1 à 0,1
w, x, y, z signifient des nombres dans la plage de 0 à 1, w + x + z = 1 ;
(2) les composés à base de La et Fe des formules générales (II) et/ou (III) et/ou (IV)
La(FeₓAl₁₋ₓ)₁₃H_{y} ou La(FeₓSi₁₋ₓ)₁₃H_{y} (II)
où
x vaut un nombre de 0,7 à 0,95,
y vaut un nombre de 0 à 3,
La(FeₓAl_{y}Co_{z})₁₃ ou La(FeₓSi_{y}Co_{z})₁₃ (III)
où
x vaut un nombre de 0,7 à 0,95,
y vaut un nombre de 0,05 à 1-x,
z vaut un nombre de 0,005 à 0,5,
LaMnₓFe₂₋ₓGe (IV)
où
x vaut un nombre de 1,7 à 1,95 et
(3) les alliages de Heusler du type MnTP, T représentant un métal de transition et P un métal dopé par p présentant un rapport du nombre d'électrons par atome e/a dans la plage de 7 à 8,5,
(4) les composés à base de Gd et Si de formule générale (V)
Gd₅(SiₓGe₁₋ₓ)₄ (V)
où x vaut un nombre de 0,2 à 1
(5) les composés à base de Fe₂P,
(6) les manganites du type pérovskite,
(7) les composés contenant des éléments des terres rares des formules générales (VI) et (VII)
Tb₅(Si₄₋ₓGeₓ) (VI)
où x = 0, 1, 2, 3, 4
XTiGe (VII)
où X = Dy, Ho, Tm,
(8) les composés à base de Mn et de Sb ou d'As des formules générales (VIII) et (IX)
Mn₂₋ₓZₓSb (VIII)
Mn₂ZₓSb₁₋ₓ (IX)
où
Z signifie Cr, Cu, Zn, Co, V, As, Ge,
x vaut 0,01 à 0,5,
Sb pouvant être remplacé par As pour autant que Z ne représente pas As.

4. Lit échangeur de chaleur selon la revendication 3, **caractérisé en ce que** le matériau thermomagnétique est choisi parmi des composés au moins quaternaires de formule générale (I), qui contiennent, outre Mn, Fe, P et le cas échéant Sb, en plus Ge ou Si ou As ou Ge et Si ou Ge et As ou Si et As, ou Ge, Si et As.

5. Procédé de fabrication de lits échangeurs de chaleur selon l'une quelconque des revendications 1 à 4, **caractérisé par** l'extrusion, le moulage par injection ou le moulage par compression du matériau thermomagnétique pour créer le monolithe.

6. Utilisation d'un lit échangeur de chaleur selon l'une quelconque des revendications 1 à 4 dans des réfrigérateurs, des installations de climatisation, des pompes à chaleur ou dans la production de courant par transformation directe de chaleur.
